# EUROPEAN PATENT SPECIFICATION

(11) **EP 2 270 639 B1**
(45) Date of publication and mention of the grant of the patent: **12.10.2016**
(21) Application number: 09164190.2
(22) Date of filing: 30.06.2009
(51) Int. Cl.: G06F 3/0488, G06F 3/048, G06F 3/02, G06F 3/041, G09B 21/00, G06F 3/023, G06F 3/044

(54) **Overlay for electronic device and method of identifying same**
Auflage für elektronisches Gerät und Verfahren zu dessen Identifizierung
Recouvrement pour dispositif électronique et son procédé d'identification

(43) Date of publication of application: 05.01.2011
(73) Proprietor: BlackBerry Limited, Waterloo, ON N2K 0A7 (CA)
(72) Inventor: Pasquero, Jerome, Waterloo Ontario N2L 3W8 (CA); Fyke, Steven Henry, Waterloo Ontario N2L 3W8 (CA)
(74) Representative: Roberts, Gwilym Vaughan

(56) References cited:
- EP-A- 0 915 411
- WO-A-91/07715
- WO-A-2005/088425
- GB-A- 2 140 943
- US-A- 4 631 700
- US-A- 5 450 078
- US-A1- 2001 051 329
- US-A1- 2003 235 452
- US-A1- 2008 067 231
- US-A1- 2009 079 698
- US-B1- 6 763 995

## Description

### Field of Technology

The present disclosure relates to portable electronic devices, including but not limited to portable electronic devices having touch screen displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities. These devices run on a wide variety of networks from data-only networks such as Mobitex® and DataTAC® networks to complex voice and data networks such as GSM/GPRS, CDMA, EDGE, UMTS and CDMA2000 networks.

Portable electronic devices such as PDAs or smart telephones are generally intended for handheld use and ease of portability. Smaller devices are generally desirable for portability. A touch screen display for input and output is particularly useful on such handheld devices, as such handheld devices are small and are therefore limited in space available for user input and output devices. Further, the screen content on the touch screen display devices may be modified depending on the functions and operations being performed. Even still, these devices have a limited area for rendering content on the touch screen display and for rendering features or icons, for example, for user interaction. With continued demand for decreased size of portable electronic devices, touch screen displays continue to decrease in size.

Improvements in touch screen devices are therefore desirable.

### Summary

An overlay comprises a sheet corresponding to a plurality of keys associated with an application for a portable electronic device. An identifier is associated with the application. The identifier is identifiable by the portable electronic device, such that the application is opened upon identification of the identifier.

US 2003/235452 relates to a "keyboard overlay" that sits on top of a touch-sensitive display screen of a computing device. After aligning the overlay on the display screen, the user types on the overlay. When the user presses a key on the overlay, the pressure is transmitted to the display screen below. That pressure is registered by the display screen as a touch. The keyboard overlay is formed to provide tactile finger-position feedback so that a user can keep his fingers oriented properly over the keyboard. The overlay may be opaque with keycap information displayed in the key areas. The overlay may be transparent, allowing the user to see a virtual keyboard painted on the display screen below. The computing device can detect the presence and type of an overlay. Applications may respond differently to different types of overlays. Different applications may be invoked depending upon the type of overlay detected.

GB 2140943 related to a computer with a microprocessor (11), a speech processor (13) and a single memory device (12) in the form of a serial ROM programmed with a high level control code for the microprocessor and speech code for the speech processor. It is a plug-in ship, replaceable by others with different dual programs. The computer is operated from a key board (10) with a set of overlays with markings indicating key positions, but unique to a particular mode of operation of the computer.

WO 91/07715 relates to a data book (20, 40,110, 171, 200, 310, 340, 440) for use in data entry device including a plurality of substrates (81-86, 120, 155, 180, 190, 231-2356, 271, 345-367) having thin electrical elements (12, 17, 34) thereon. The substrates are movable with respect to each other to provide a plurality of configurations. The substrates and the electrical elements cooperate to provide electrical properties therebetween which may be sensed to determine substrates separation and prove the system with information to cause its mode of operation to correspond with the page opened. In several embodiments, the substrates are arranged in pageable books (40), tablets (210), sheet arrays (371), and exchange booklets (440).

The present invention is set out in the independent claims, with some optional features set out in the claims dependent thereto.

### Brief Description of the Drawings

FIG. 1 is a block diagram of a portable electronic device in accordance with the disclosure.
FIG. 2 illustrates an overlay, with a tactile barcode, disposed on a portable electronic device in accordance with the disclosure.
FIG. 3 through FIG. 5 are cross-sections of various tactile barcodes for an overlay in accordance with the disclosure.
FIG. 6 illustrates an overlay, with a magnet identifier, disposed on a portable electronic device in accordance with the disclosure.
FIG. 7 illustrates a cross-section of an overlay, with a magnet identifier, disposed on a portable electronic device in accordance with the disclosure.
FIG. 8 illustrates a cross-section of an overlay, with a visual indicator, disposed on a portable electronic device in accordance with the disclosure.
FIG. 9 illustrates a visual indicator for an overlay in accordance with the disclosure.
FIG. 10 is a flowchart illustrating a method of identifying an overlay with an identifier in accordance with the disclosure.
FIG. 11 illustrates an example identifier scheme for an overlay in accordance with the disclosure.

### Detailed Description

The following describes an apparatus for and method of identifying an overlay for an application for a portable electronic device. The overlay includes an identifier that corresponds to an application that is opened after identification of the application associated with identifier. The identifier may include a tactile barcode, a magnets disposed in various orientations, and visual indicators.

For simplicity and clarity of illustration, reference numerals may be repeated among the figures to indicate corresponding or analogous elements. In addition, numerous specific details are set forth in order to provide a thorough understanding of the embodiments described herein. The embodiments described herein may be practiced without these specific details. In other instances, well-known methods, procedures and components have not been described in detail so as not to obscure the embodiments described herein. Also, the description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smartphones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

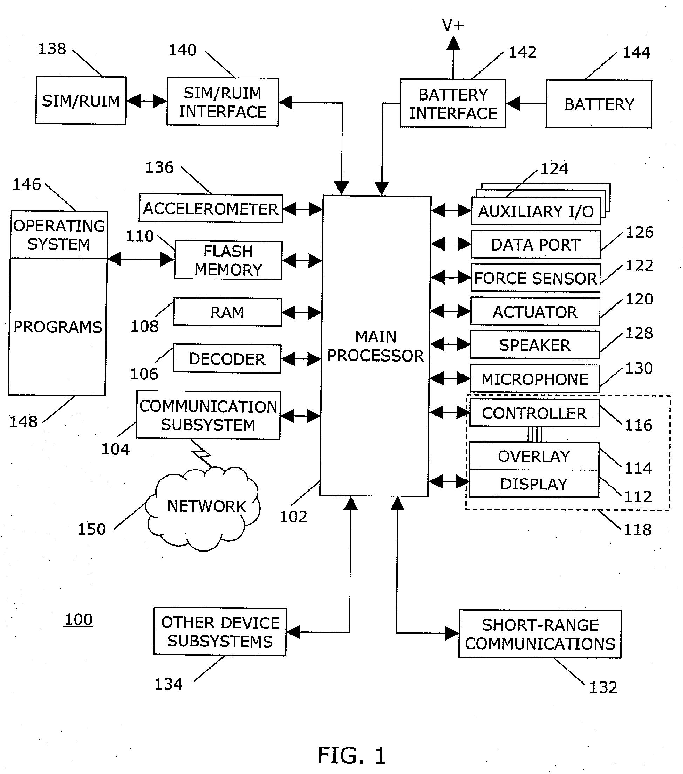

A block diagram of an example of an embodiment of a portable electronic device 100 is shown in FIG. 1. The portable electronic device 100 includes a number of components such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data-centric wireless networks, voice-centric wireless networks, and dual-mode networks that support both voice and data communications over the same physical base stations. The portable electronic device 100 is a battery-powered device and includes a battery interface 142 for receiving one or more rechargeable batteries 144.

The processor 102 also interacts with additional subsystems such as a Random Access Memory (RAM) 108, a flash memory 110, a display 112 with a touch-sensitive overlay 114 connected to an electronic controller 116 that together make up a touch-sensitive display 118 (also referred to in the art as a touch screen display), an actuator 120, a force sensor 122, an auxiliary input/output (I/O) subsystem 124, a data port 126, a speaker 128, a microphone 130, short-range communications 132 and other device subsystems 134. The processor 102 interacts with the touch-sensitive overlay 114 via the electronic controller 116. Information, such as text, characters, symbols, images, and other items that may be displayed on a portable electronic device, is displayed on the touch-sensitive display 118 via the processor 102. The processor 102 may also interact with an accelerometer 136 as shown in FIG. 1. The accelerometer 136 may include a cantilever beam with a proof mass and suitable deflection sensing circuitry. The accelerometer 136 may be utilized for detecting direction of gravitational forces or gravity-induced reaction forces.

To identify a subscriber for network access according to the present embodiment, the portable electronic device 100 uses a Subscriber Identity Module or a Removable User Identity Module (SIM/RUIM) card 138 inserted into a SIM/RUIM interface 140 for communication with a network such as the wireless network 150. Alternatively, user identification information may be programmed into the flash memory 110.

The portable electronic device 100 also includes an operating system 146 and software components 148 that are executed by the processor 102 and are typically stored in a persistent store such as the flash memory 110. Additional applications may be loaded onto the portable electronic device 100 through the wireless network 150, the auxiliary I/O subsystem 124, the data port 126, the short-range communications subsystem 132, or any other suitable device subsystem 134.

In use, a received signal such as a text message, an e-mail message, or web page download is processed by the communication subsystem 104 and input to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104. For voice communications, the overall operation of the portable electronic device 100 is substantially similar except that the received signals are output to the speaker 128 and signals for transmission are generated by the microphone 130.

An overlay for use with an application for a portable electronic device is known. Overlays are typically thin sheets of material that are disposed on a portable device 100 to provide an easier way to interact with the applications that run on the portable device 100. The material may be non-conductive and may include plastic, rubber, silicone, glass, cardboard, and so forth, as known in the art, and may be flexible. Overlays are often adapted to keys associated with an application. The term "keys" as utilized herein, includes virtual or displayed keys that are images displayed on a touch-sensitive display, as well as mechanical keys, such as physical individual keys utilized as part of a keyboard for a portable device 100. Keys may be associated with characters, such as letters, numbers, spaces, and punctuation marks, and/or functions, such as shift, control, alpha, numeric, symbol, alternate, delete, return, enter, power, and so forth, and/or symbols representing actions or operations, for example, play, stop, and pause for a media player, previous and next for a web browser, and so forth. Thus, the term "keys" is not limited to keys from a keyboard.

For example, an overlay utilized with a touch-sensitive display 118 may include holes or cut-outs, or optionally thin membranes with ridges, which align with keys that are displayed on the touch-sensitive display 118, thereby identifying touch areas more perceptibly both visually and by feel. The key areas may optionally be raised. Such an overlay may be utilized, for example, by a visually-impaired person to identify the keys for a specific application. In another example, an overlay for use with mechanical keys may include Braille identifications that indicate the information printed on the mechanical key, e.g., characters and functions.

An identifier for the application associated with or corresponding to the overlay is included with the overlay. Each identifier is uniquely associated with an overlay. One or more overlays may be utilized for an application. The identifiers may be formed as part of the overlay when the overlay is formed, may be inserted in the overlay after the overlay is formed, or may be separate pieces from the overlay. The following text and associated drawings provide various examples of how a device 100 may identify the identifier and associate the identifier with its application in order to open or launch the application.

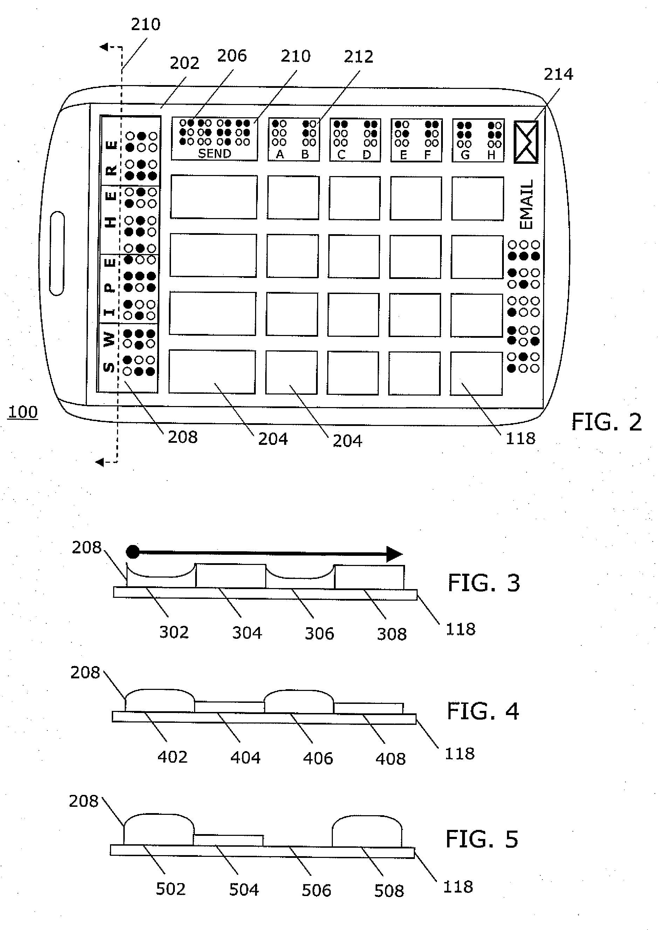

An overlay 202 with a tactile barcode 208 is shown disposed on a portable electronic device in FIG. 2. In this example, the overlay 202 comprises a sheet corresponding to a plurality of keys associated with an email application for a portable electronic device 100. The overlay 202 is shown with a plurality of areas 204 that align and correspond to various different keys. The overlay 202 may include thicker regions between and around these areas 204 to make them more perceptible visually and tactilely. The areas 204 are ideally located above their respective keys for the associated application. The areas 204 may be comprised of holes, or cut-outs, or thin membranes that do not unduly interfere with the ability to select the key below. Identifications 206 of the keys below the overlay 202 may advantageously be included, which identifications 206 may be identified through feel (tactile) or vision, as well as other information for the overlay 202, such as an identification of the application, e.g., EMAIL. For example, the SEND key 210 is shown with a Braille identification 206 and text identification 206. The A and B key 212 is labeled as such in text and Braille. The identification 206 may also be a symbol 214, e.g., an envelope for email, or a physical identifier other than Braille that may be identified through feel (tactile) and/or vision. Although the Braille and text identifications 206 are shown disposed on a thin membrane over the key, the identifications 206 may alternatively be disposed on the regions surrounding the areas 204 for the keys, for example, when the areas 204 are formed as holes or cut-outs.

The overlay 202 also includes an identifier in the form of a tactile barcode 208 comprised of a plurality of sections, which, in the example of FIG. 2, is four sections. Any number of sections may be utilized such that identification of each of the overlays for the various applications is possible. The phrase "SWIPE HERE" is shown on the tactile barcode in text and Braille. A tactile barcode is read by detection of touches along the sections of the tactile barcode, rather than visually reading the barcode. The combination of touch values read for the sections provides a similar function to the combination of bars and spaces on a visual barcode, although the tactile barcode is read differently. Touch values include, for example, simple detection of a touch of any kind (e.g., touch, swipe, or gesture) where "1" indicates a touch and "0" indicates no touch, a capacitance value (see below), a resistance value (e.g., a resistance measurement or detection of one of various levels of resistance), a force value, and so forth, or a combination thereof. When each of the sections is associated with one of at least two different touch values, at least 2⁴ possible different applications may be identified when the tactile barcode comprises four sections. The tactile barcode 208 may advantageously be located in the same part of each overlay 202, and the tactile barcode for each overlay may be positioned over the same part of the touch-sensitive display 118. This part of the touch-sensitive display 118 may be dedicated to the tactile barcode 208, and reading of the tactile barcode 208 may be triggered, for example, by detection of a touch in or above each of the sections within a predetermined period of time. Alternatively, one or more magnets on the sheet may trigger a Hall effect sensor on the device 100, which in turn enters a state where the device expects touch input from the area of the touch-sensitive display 118 below the tactile barcode 208. In other words, the magnet "informs" the device 100 that a sheet has been overlaid to trigger monitoring for the touch values for the tactile barcode 208. Completion of reading the barcode may take place, for example, when a reading is detected for each section of the tactile barcode 208; by detection of selection of a common and unique tactile barcode completion pattern, not used elsewhere in a tactile barcode; by detection of completion by selection of a physical key or enter-type key on the touch-sensitive display 118; by detection of actuation of a switch engaged by depressing the touch-sensitive display 118 with a threshold force; by detection of a force imparted on the touch-sensitive display 118, and so forth.

When the tactile barcode 208 is utilized with a touch-sensitive display 118 that is capacitive in nature, touching the different sections of the tactile barcode 208 results in capacitance values as the touch values. Such a result may be achieved when the tactile barcode is comprised of different thicknesses in each of the sections. Cross-sections of various tactile barcodes 208 for an overlay are shown in FIG. 3 through FIG. 5, as taken through the section line 210 of FIG. 2. In these examples, various thicknesses of the sections of the tactile barcode 208 produce different capacitance values. In the example of FIG. 3, two of the sections 302, 306 are closer to the touch-sensitive overlay 118 than the other two sections 304, 308, thereby producing two different capacitance values. In the example of FIG. 4, two of the sections 402, 406 are further from the touch-sensitive overlay 118 than the other two sections 404, 408, thereby producing two different capacitance values. In the example of FIG. 5, two of the sections 502, 508 are furthest from the touch-sensitive overlay 118, one section 506 is very thin or empty and thus closest to the touch-sensitive overlay 118 and one section 504 is between the others. When adjacent sections of the tactile barcode 208 have the same value, a small ridge or groove may be included between the sections to identify their borders more readily. One of the thicknesses of the sections may be 0, which corresponds to a cut-out or hole in the overlay.

Table 1 and Table 2 below give examples of coding of the various sections of the tactile barcode 208 and how the coding is associated with an application. Each different set of touch values, e.g., capacitance values, is associated with an overlay and an application. When a set of capacitance values is found in one of the tables, the associated application may be ascertained. Table 1 illustrates values for tactile barcodes utilizing two different capacitance values, where "0" represents one value and "1" represents the other value, for a total of 16 different codes and up to 16 applications. Table 2 illustrates values for tactile barcodes utilizing three different capacitance values, where "0" represents one value, "1" represents another value, and "2" represents the third value, for a total of 81 different codes (3⁴) and up to 81 applications. If all of the different codes are not utilized, the codes may be strategically selected to utilize codes that are more easily implemented on the overlay 202 and/or more easily detected by the portable electronic device 100. The various sections of the tactile barcode 208 are assigned values in the table. For example, Section A may be assigned to the first section 302, 402, 502, Section B may be assigned to the second section 304, 404, 504, Section C may be assigned to the second section 306, 406, 506, and Section D may be assigned to the second section 308, 408, 508. Any correlation of sections of the tactile barcode to the Sections in the table may be utilized. Alternatively, an analog capacitive signature may be created for each tactile barcode, where the capacitive values range, for example, from 0% (no capacitance) to 100% (maximum capacitance).

**Table 1**

| **Application** | **Section A** | **Section B** | **Section C** | **Section D** |
|---|---|---|---|---|
| Email | 0 | 0 | 0 | 1 |
| Music | 0 | 0 | 1 | 0 |
| Contacts | 0 | 1 | 0 | 0 |
| Calendar | 1 | 0 | 0 | 1 |
| ... | | | | |
| Internet | 1 | 1 | 0 | 1 |

**Table 2**

| **Application** | **Section A** | **Section B** | **Section C** | **Section D** |
|---|---|---|---|---|
| Email | 0 | 0 | 0 | 1 |
| Music | 2 | 0 | 1 | 0 |
| Contacts | 0 | 1 | 0 | 2 |
| Calendar | 1 | 0 | 2 | 0 |
| ... | | | | |
| Internet | 2 | 1 | 0 | 1 |

Capacitance values are obtained when a touch is detected along the barcode, e.g., in each of the sections of the tactile barcode 208. When at least one touch is detected along the sections 302, 306, 304, 308 of the tactile barcode 208, for example the one in FIG. 3, the portable electronic device 100 reads the tactile barcode 208. A touch along the tactile barcode 208 comprises any of a swipe in or along each of the sections 302, 306, 304, 308, a separate touch in each of the sections 302, 306, 304, 308, or a touch and a "click" in each of the sections 302, 306, 304, 308. A "click" may refer to actuation of a switch caused by depression of the touch-sensitive display 118 or detection of a force of a predetermined value, which force indicates selection is intended.

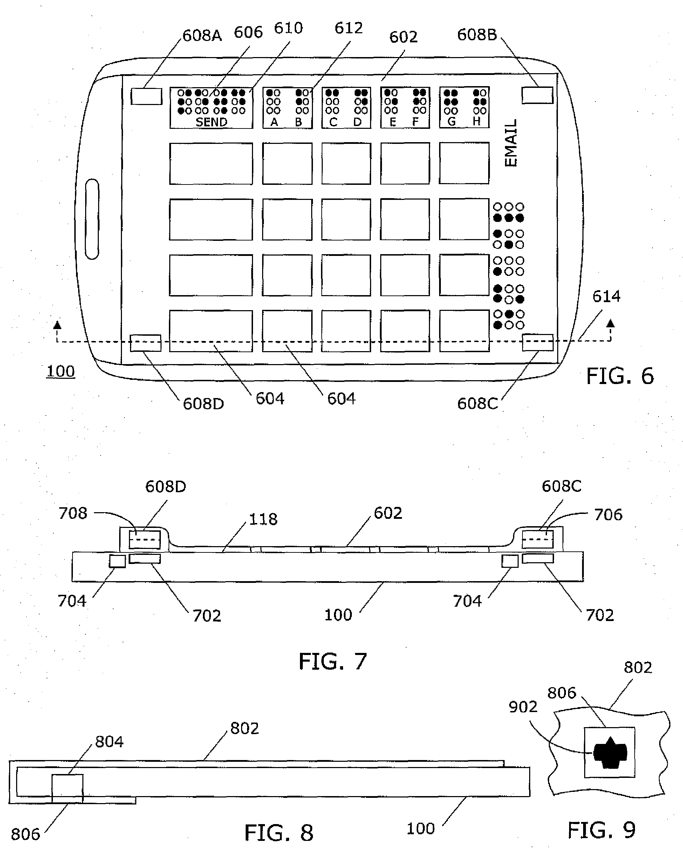

An overlay with a magnet identifier is shown disposed on a portable electronic device in FIG. 6. In this example, which is similar in many ways to the overlay 202 of FIG. 2, the overlay 602 comprises a sheet corresponding to a plurality of keys associated with an email application for a portable electronic device 100. The overlay 602 is shown with a plurality of areas 604 that align and correspond to various different keys. The overlay 602 includes thicker regions between and around these areas 604 to make them more perceptible visually and tactilely. The areas 604 are ideally located above their respective keys for the associated application. The areas 604 may be comprised of holes or thin membranes that do not unduly interfere with the ability to select the key below. Identifications 606 of the keys that lie underneath the overlay 602 may advantageously be included, as well as other information for the overlay 602, such as an identification of the application, e.g., EMAIL. For example, the SEND key 610 is shown with a Braille identification 606 and text identification 606. An area 604 utilized for the A and B key 612 is labeled as such in text and Braille. Although the identifications 606 are shown disposed on a thin membrane over the key, the identifications 606 may alternatively be disposed on the thicker regions surrounding the areas 604 for the keys.

The overlay 602 also includes an identifier in the form of a plurality of magnets 608A, 608B, 608C, 608D disposed in various locations on the overlay 602. Each magnet 608A, 608B, 608C, 608D is located in an orientation with respect to its poles, or lack thereof when no magnet is found in a given location. Each different set of orientations is associated with an application. When the application associated with a set of orientations is identified, the application is opened or launched.

Each location of the magnets 608A, 608B, 608C, 608D has a corresponding location on the portable electronic device 100. When the overlay 602 is correctly positioned with respect to the device 100, the magnets 608A, 608B, 608C, 608D are aligned with their corresponding locations on the device 100, and identification of the set of orientations occurs. Ferromagnetic material 702 may be placed in the corresponding locations to facilitate alignment, such as shown in FIG. 7. The magnets 608A, 608B, 608C, 608D may utilize the ferromagnetic material 702 to align to the device 100 as well as to hold the overlay 602 in position with respect to the keys. Sensors 704, such as Hall effect sensors, may be utilized to identify the orientation, as well as the presence or absence, of the magnets 608A, 608B, 608C, 608D, which sensors are advantageously located near the magnets when the overlay 602 is aligned with the device 100. The orientation 706 for the third magnet 608C is shown with magnetic north on the lower half, and the orientation 708 for the fourth magnet 608D is shown with magnetic south on the lower half, as illustrated in the cross-section in FIG. 7 taken through the section line 614 in FIG. 6. Alternatively, the orientations may be made with respect to the upper half of the magnets 608A, 608B, 608C, 608D. Although the poles of the magnets 608A, 608B, 608C, 608D are shown arranged in a direction perpendicular to the surface of the touch-sensitive display 118, the poles may be arranged in a direction parallel to the surface of the touch-sensitive display 118.

Table 3 and Table 4 below give examples of coding of the set of orientations for the magnets 608A, 608B, 608C, 608D and how the coding is associated with an application. A unique set of orientations may be associated with each of a plurality of overlays 602. When a set of orientations is found in one of the tables, the associated application may be ascertained. Table 3 illustrates values for magnets disposed in two different magnet orientations, where "N" represents one value and "S" represents the other value, for a total of 16 different codes and up to 16 applications. Table 4 illustrates values for tactile barcodes utilizing three different orientations, where "N" represents one value, "S" represents another value, and "0" represents the third value when no magnet is placed in a particular location, for a total of 80 different codes (3⁴-1 because no magnets detected corresponds to no overlay being in place as well, thus orientation Ø Ø Ø Ø is not utilized) and up to 80 applications. If all of the different codes are not utilized, the codes may be strategically selected to utilize codes that are more easily implemented on the overlay 602, such as those with two or more magnets, and/or more easily detected by the portable electronic device 100. Orientations for the various magnets 608A, 608B, 608C, 608D are shown in the table. Any correlation of magnets to the columns in the table may be utilized. Alternatively, the magnets 608A, 608B, 608C, 608D may have various different strengths of magnetic field, facilitating an even larger number of different codes. The magnets may also be disposed in a portrait (up and down, with respect to a viewer's perspective) or landscape (left and right, with respect to a viewer's perspective) orientation to provide more codes. More than four magnets may also be utilized.

**Table 3**

| **Application** | **608A** | **608B** | **608C** | **608D** |
|---|---|---|---|---|
| Email | N | N | N | S |
| Music | N | N | S | N |
| Contacts | N | S | N | N |
| Calendar | S | N | N | S |
| ... | | | | |
| Internet | S | S | N | S |

**Table 4**

| **Application** | **608A** | **608B** | **608C** | **608D** |
|---|---|---|---|---|
| Email | N | N | N | S |
| Music | Ø | N | S | N |
| Contacts | N | S | N | Ø |
| Calendar | S | N | Ø | N |
| ... | | | | |
| Internet | Ø | S | N | S |

A cross-section of an overlay with a visual indicator is shown disposed on a portable electronic device in FIG. 8. When a visual indicator 806 is utilized as the identifier for the overlay 802, a camera 804 disposed in the portable electronic device 100 may be utilized to read or identify the visual indicator 806. The overlay 802 may wrap around one end of the portable electronic device 100 such that proper alignment of the overlay 802 with the keys results in alignment of the visual indicator 806 with the camera 804. Examples of visual indicators 806 include barcodes, different translucent colored segments disposed or embedded in the overlay 802, and different shapes 902 disposed or embedded in the overlay 802, such as shown in FIG. 9. Each different barcode, color, or shape is associated with a different overlay 802, and each overlay corresponds to an application.

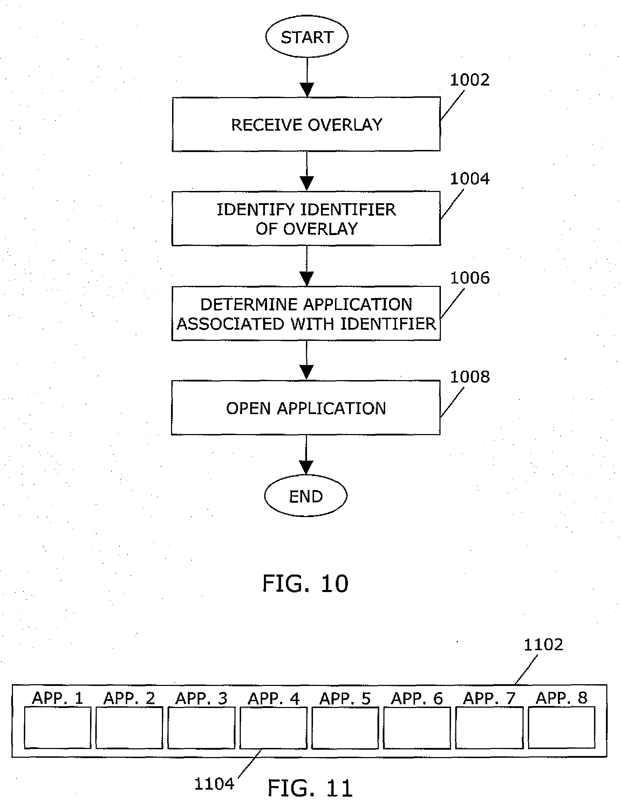

A flowchart illustrating a method of identifying an overlay with an identifier is shown in FIG. 10. The flowchart is performed by the portable electronic device, which may utilize its processor 102 to run software to perform some of the steps, as known in the art. The portable electronic device 100 receives 1002 the overlay 202, 602, 802 that is aligned with the keys of the device 100. The identifier associated with the overlay 202, 602, 802 is identified 1004 depending on the nature of the identifier, such as described above. For the following examples of identifiers, the tactile barcode 208 may be identified through the touch-sensitive display 118 that ascertains the capacitive values, the magnets 608A, 608B, 608C, 608D may be identified by sensors 704 that ascertain the orientations of the magnets 608A, 608B, 608C, 608D, and visual indicators 806 may be identified with a camera 804, as described above. Tables, such as those shown above, may be utilized to determine the application for the overlay after identification of the identifier, e.g., capacitance values, magnet orientations, visual indications, and so forth. An application associated with the identifier is determined 1006, e.g., based on the nature of the identifier, as described above, and the identified application is opened or launched 1008. The method may be repeated for each overlay 202, 602, 802 received on the portable electronic device 100.

An example of a simple identifier scheme is shown in FIG. 11, which scheme combines the application name with the identifier 1102. In this example, when a tactile barcode that is capacitive in nature is utilized, the box 1104 below the appropriate application label, e.g., APP. 4, is different than the remaining boxes. For example, the identifier 1102 may consist of a cut-out or hole in the box 1104 below the application name associated with the overlay. When a touch of a predetermined value, e.g., a value associated with a cut-out, is detected in any of the boxes 1104, the associated application may be identified. Thus, only a single touch need be detected to identify an application. Alternatively, when the identifier 1102 is a magnetic identifier, a single magnet may be placed in a location near the application name, for example, below the application name or in the box 1104 below the application name. Alternatively, a magnet may be placed in each of the locations except for the area near the relevant application name. Similarly, when the identifier 1102 is a visual indicator, the box 1104 below the application name may be somehow different than the others. For example, the relevant box may be a cut-out or hole, and the application is identified simply as the one through which light is detected. Alternatively, a different shape may be utilized in the box 1104 below the relevant application name.

The present disclosure sets forth an identifier for one or more overlays associated with an application for a portable electronic device. Different types of identifiers are set forth, including a tactile barcode, set of magnet orientations, and visual indicators. Tactile barcodes are advantageous, for example, because they facilitate simple and fast touch identification utilizing detection apparatus present in a touch-sensitive display, such one capacitive in nature. Tactile barcodes provide for identification of numerous different applications with little complexity. Magnetic identifiers are easy to use, may be automatically read by one or more conveniently placed Hall effect sensors, provide for identification of numerous different applications with little complexity, and may hold the overlay in position with respect to the virtual or soft keys on the display. Once the identifier is identified, the application associated with the overlay is ascertained, and the application may be opened or launched without further need for interaction by a user. Overlays with such identifiers make use of such overlays easier for users, including the visually impaired. Applications are launched more quickly because a user does not need to navigate through one or more menus to launch. Non-visual interactions are made easier for sighted as well as visually-impaired users, because the user need not look at the device screen.

An overlay comprises a sheet corresponding to a plurality of keys associated with an application for a portable electronic device. An identifier is associated with the application. The identifier is identifiable by the portable electronic device, such that the application is opened upon identification of the identifier.

The identifier may comprise a plurality of sections, wherein each section has one of at least two different thicknesses. A touch-sensitive display detects a different capacitance for each different thickness when touched. When at least one touch is detected along the plurality of sections, the application is identified.

The identifier may comprise a plurality of magnets disposed in a plurality of first locations on the sheet, wherein the plurality of first locations are aligned with a plurality of second locations on the portable electronic device. Each of the plurality of magnets may be disposed in one of at least two different orientations. The at least two different orientations may comprise magnetic north and magnetic south. The plurality of magnets may hold the overlay in position with respect to the plurality of keys.

The identifier may comprise a visual indicator. The visual indicator may comprise a bar code, a camera-readable shape disposed in the sheet, a translucent colored segment disposed in the sheet. The overlay may further comprise at least one tactile identification related to the application. The plurality of keys may comprise mechanical keys or images displayed on a touch-sensitive display.

A method comprises receiving, by a portable electronic device, a overlay for a plurality of keys, wherein the overlay corresponds to a first of a plurality of applications that run on the portable electronic device. An identifier associated with the overlay is identified. Which of the plurality of applications is associated with the identifier is determined, yielding an identified application. The identified application is opened on the portable electronic device.

Identifying may comprise reading a tactile barcode disposed on the overlay by detecting at least one touch along the tactile barcode. A unique set of capacitance values may be associated with each of a plurality of overlays, and identifying the identifier may comprise detecting a set of capacitance values from touches detected on a touch-sensitive display.

The method may further comprise detecting a touch on each of a plurality of sections of the overlay; identifying a capacitance value for each of the plurality of sections, yielding a set of capacitance values; and determining the first application from the set of capacitance values.

The method may further comprise identifying a capacitance value for each of a plurality of touches on a touch-sensitive display, yielding a set of capacitance values; and determining the first application from the set of capacitance values.

The method may comprise receiving, by a portable electronic device, a first overlay for a plurality of keys, wherein the first overlay corresponds to a first of a plurality of applications that run on the portable electronic device. A first identifier associated with the first overlay is identified. Which of the plurality of applications is associated with the first identifier is determined, yielding a first identified application. The first identified application is opened on the portable electronic device. The method may further comprise receiving, by a portable electronic device, a second overlay, wherein the second overlay corresponds to a second of the plurality of applications. A second identifier associated with the second overlay is identified. Which of the plurality of applications is associated with the second identifier is determined, yielding a second identified application. The second identified application is opened on the portable electronic device.

Identifying may comprise ascertaining an orientation for each of a plurality of magnets aligned with the portable electronic device, yielding a set of magnet orientations. Which of the plurality of applications is associated with the set of magnet orientations may be determined.

An overlay comprises a sheet corresponding to a plurality of keys associated with an application for a portable electronic device. A tactile barcode is associated with the application. The portable electronic device detects at least two touch values from at least one touch along the tactile barcode and associates the at least two touch values with the application, such that the application is opened upon detection of the at least two touch values.

The tactile barcode may comprise a plurality of sections. Each section has one of at least two different thicknesses. A touch-sensitive display detects a different capacitance for each different thickness when a touch is detected. The at least two touch values comprise capacitance values for each of the plurality of sections. The plurality of keys may comprise mechanical keys or images displayed on a touch-sensitive display.

A method comprises receiving, by a portable electronic device, an overlay for a plurality of keys, wherein the overlay corresponds to a first of a plurality of applications that run on the portable electronic device. A tactile barcode associated with the overlay is read, yielding a set of touch values. Which of the plurality of applications is associated with the set of touch values is determined, yielding an identified application. The identified application is opened on the portable electronic device. A computer-readable medium may have computer-readable code embodied therein, and the computer-readable code may be executable by a processor of the portable electronic device to perform the method.

Reading may comprise detecting at least one touch along the tactile barcode. Reading may comprise detecting at least one touch along a plurality of sections of the tactile barcode and identifying a capacitance value for each of the plurality of sections, thereby yielding the set of touch values. A unique set of touch values may be associated with each of a plurality of overlays.

A portable electronic device comprises a plurality of keys, a plurality of sensors arranged and constructed to identify an identifier associated with an overlay, and a processor arranged and constructed to open an application associated with the identifier.

The described embodiments are to be considered in all respects only as illustrative and not restrictive. The scope of the disclosure is, therefore, indicated by the appended claims rather than by the foregoing description.

## Claims

1. A system comprising a portable electronic device and an overlay (202) disposed on a touch-sensitive display (118) of the portable electronic device (100), comprising:
a sheet corresponding to a plurality of keys associated with an application for the portable electronic device (100);
an identifier (208) associated with the application, wherein the identifier (208) comprises a plurality of sections (302, 304, 306, 308), wherein each section of the plurality of sections (302, 304, 306, 308) has one of at least two different thicknesses, and wherein the touch-sensitive display (118) of the portable electronic device (100) is configured to detect a different capacitance for each different thickness when a touch is detected;
wherein the portable electronic device (100) is configured to detect at least two capacitance values from at least one touch along the plurality of sections (302, 304, 306, 308) of the identifier (208), wherein the at least one touch comprises a swipe in or along each of the sections or a separate touch in each of the sections, and associate the at least two capacitance values with the plurality of sections (302, 304, 306, 308) and the application, such that the portable electronic device (100) causes the application to open upon detection of the at least two capacitance values.

2. The portable electronic device (100) of claim 1, wherein the plurality of keys comprises mechanical keys or images displayed on a touch-sensitive display (118) of the portable electronic device (100).

3. A method comprising:
receiving, on a touch-sensitive display (118) of a portable electronic device (100), an overlay (202) for a plurality of keys, wherein the overlay (202) comprises an identifier (208) associated with one of a plurality of applications that run on the portable electronic device (100), wherein the identifier (208) comprises a plurality of sections (302, 304, 306, 308) and wherein each section of the plurality of sections (302, 304, 306, 308) has one of at least two different thicknesses, and wherein the touch-sensitive display (118) of the portable electronic device (100) is configured to detect a different capacitance for each different thickness when a touch is detected;
detecting at least one touch along the plurality of sections (302, 304, 306, 308) of the identifier (208), yielding a set of capacitance values, wherein the at least one touch comprises a swipe in or along each of the sections or a separate touch in each of the sections;
determining which of the plurality of applications is associated with the identifier (208) based on the set of capacitance values, yielding an identified application;
opening the identified application on the portable electronic device (100).

4. The method of claim 3 wherein determining the identified application comprises determining the identified application from the set of capacitance values.

5. A computer-readable medium having computer-readable code embodied therein, the computer-readable code executable by a processor of the portable electronic device to perform the method of any of claims 1-4.

## Patentansprüche

1. System mit einer tragbaren Elektronikvorrichtung und einer Auflage (202), die auf einer berührungsempfindlichen Anzeige (118) der tragbaren Elektronikvorrichtung (100) angeordnet ist, mit:
einer Platte, die einer Vielzahl von Tasten entspricht, die mit einer Anwendung für die tragbare Elektronikvorrichtung (100) verknüpft ist,
einem Identifikator (208), der mit der Anwendung verknüpft ist, wobei der Identifikator (208) eine Vielzahl von Abschnitten (302, 304, 306, 308) aufweist, wobei jeder Abschnitt der Vielzahl von Abschnitten eine von mindestens zwei verschiedene Dicken hat, und wobei die berührungsempfindliche Anzeige (118) der tragbaren Elektronikvorrichtung (100) dazu konfiguriert ist, eine verschiedene Kapazität für jede verschiedene Dicke zu erfassen, wenn eine Berührung erfasst wird,
wobei die tragbare Elektronikvorrichtung (100) dazu konfiguriert ist, mindestens zwei Kapazitätswerte von mindestens einer Berührung entlang der Vielzahl von Abschnitten (302, 304, 306, 308) des Identifikators (208) zu erfassen, wobei die mindestens eine Berührung ein Wischen in oder entlang jedem der Abschnitte oder eine separate Berührung in jedem der Vielzahl von Abschnitten (302, 304, 306, 308) aufweist, und die mindestens zwei Kapazitätswerte mit der Vielzahl von Abschnitten (302, 304, 306, 308) und der Anwendung zu verknüpfen, so dass die tragbare Elektronikvorrichtung (100) die Anwendung veranlasst, sich infolge Erfassung der mindestens zwei Kapazitätswerte zu öffnen.

2. Tragbare Elektronikvorrichtung (100) nach Anspruch 1, wobei die Vielzahl von Tasten mechanische Tasten oder Bilder aufweist, die auf der berührungsempfindlichen Anzeige (118) der tragbaren Elektronikvorrichtung (100) angezeigt sind.

3. Verfahren mit:
Aufnehmen einer Auflage (202) für eine Vielzahl von Tasten auf einer berührungsempfindlichen Anzeige (118) einer tragbaren Elektronikvorrichtung (100), wobei die Auflage (202) einen Identifikator (208) aufweist, der mit einer Vielzahl von Anwendungen verknüpft ist, die auf der tragbaren Elektronikvorrichtung (100) arbeiten, wobei der Identifikator (208) eine Vielzahl von Abschnitten (302, 304, 306, 308) aufweist, und wobei jeder Abschnitt der Vielzahl von Abschnitten (302, 304, 306, 308) eine von mindestens zwei verschiedenen Dicken hat, und wobei die berührungsempfindliche Anzeige (118) der tragbaren Elektronikvorrichtung (100) dazu konfiguriert ist, eine verschiedene Kapazität für jede verschiedene Dicke zu erfassen, wenn eine Berührung erfasst wird,
Erfassen mindestens einer Berührung entlang der Vielzahl von Abschnitten (302, 304, 306, 308) des Identifikators (208), was eine Menge von Kapazitätswerten hervorbringt, wobei die mindestens eine Berührung ein Wischen in oder entlang jeder der Abschnitte oder eine separate Berührung in jedem der Abschnitte aufweist,
Bestimmen, welche der Vielzahl von Anwendungen mit dem Identifikator (208) verknüpft ist, auf Grundlage der Menge von Kapazitätswerten, was eine identifizierte Anwendung hervorbringt,
Öffnen der identifizierten Anwendung auf der tragbaren Elektronikvorrichtung (100).

4. Verfahren nach Anspruch 3, wobei das Bestimmen der identifizierten Anwendung eine Bestimmen der identifizierten Anwendung von der Menge von Kapazitätswerten aufweist.

5. Computerlesbares Medium mit computerlesbarem Code, der darin verkörpert ist, wobei der computerlesbare Code von einem Prozessor der tragbaren Elektronikvorrichtung ausführbar ist, um das Verfahren nach einem der Ansprüche 1 bis 4 durchzuführen.

## Revendications

1. Système comprenant un dispositif électronique portable et un recouvrement (202) disposé sur un dispositif d'affichage tactile (118) du dispositif électronique portable (100), comprenant :
une feuille correspondant à une pluralité de touches associées à une application pour le dispositif électronique portable (100) ;
un identificateur (208) associé à l'application, où l'identificateur (208) comprend une pluralité de sections (302, 304, 306, 308), où chaque section de la pluralité de sections (302, 304, 306, 308) a l'une d'au moins deux épaisseurs différentes, et où le dispositif d'affichage tactile (118) du dispositif électronique portable (100) est configuré pour détecter une capacitance différente pour chaque épaisseur différente lorsqu'un toucher est détecté ;
dans lequel le dispositif électronique portable (100) est configuré pour détecter au moins deux valeurs de capacitance à partir d'au moins un toucher le long de la pluralité de sections (302, 304, 306, 308) de l'identificateur (208), où l'au moins un toucher comprend un glissement dans ou le long de chacune des sections ou un toucher séparé dans chacune des sections, et pour associer l'au moins deux valeurs de capacitance à la pluralité de sections (302, 304, 306, 308) et à l'application, de sorte que le dispositif électronique portable (100) amène l'application à s'ouvrir suite à la détection de l'au moins deux valeurs de capacitance.

2. Dispositif électronique portable (100) de la revendication 1, dans lequel la pluralité de touches comprend des touches mécaniques ou des images affichées sur un dispositif d'affichage tactile (118) du dispositif électronique portable (100).

3. Procédé comprenant le fait :
de recevoir, sur un dispositif d'affichage tactile (118) d'un dispositif électronique portable (100), un recouvrement (202) pour une pluralité de touches, où le recouvrement (202) comprend un identificateur (208) associé à l'une d'une pluralité d'applications qui sont exécutées sur le dispositif électronique portable (100), où l'identificateur (208) comprend une pluralité de sections (302, 304, 306, 308) et où chaque section de la pluralité de sections (302, 304, 306, 308) a l'une d'au moins deux épaisseurs différentes, et où le dispositif d'affichage tactile (118) du dispositif électronique portable (100) est configuré pour détecter une capacitance différente pour chaque épaisseur différente lorsqu'un toucher est détecté ;
de détecter au moins un toucher le long de la pluralité de sections (302, 304, 306, 308) de l'identificateur (208), donnant un ensemble de valeurs de capacitance, où l'au moins un toucher comprend un glissement dans ou le long de chacune des sections ou un toucher séparé dans chacune des sections ;
de déterminer laquelle de la pluralité d'applications est associée à l'identificateur (208) sur la base de l'ensemble de valeurs de capacitance, résultant en une application identifiée ;
d'ouvrir l'application identifiée sur le dispositif électronique portable (100).

4. Procédé de la revendication 3, dans lequel le fait de déterminer l'application identifiée comprend le fait de déterminer l'application identifiée à partir de l'ensemble de valeurs de capacitance.

5. Support lisible par ordinateur ayant un code lisible par ordinateur incorporé dans celui-ci, le code lisible par ordinateur pouvant être exécuté par un processeur du dispositif électronique portable pour réaliser le procédé de l'une des revendications 1 à 4.
